# EUROPEAN PATENT APPLICATION

(11) **EP 4 358 622 A1**
(43) Date of publication of application: **24.04.2024**
(21) Application number: 22889075.2
(22) Date of filing: 13.10.2022
(51) Int. Cl.: H04W 72/04, H04L 5/00

(54) **INFORMATION TRANSMISSION METHOD, AND DEVICE AND STORAGE MEDIUM**

(30) Priority: 04.11.2021 CN 202111300364
(71) Applicant: ZTE Corporation, Shenzhen, Guangdong 518057 (CN)
(72) Inventor: ZOU, Minqiang, Shenzhen, Guangdong 518057 (CN); JIANG, Chuangxin, Shenzhen, Guangdong 518057 (CN); ZHANG, Yang, Shenzhen, Guangdong 518057 (CN); GAO, Bo, Shenzhen, Guangdong 518057 (CN); LU, Zhaohua, Shenzhen, Guangdong 518057 (CN)
(74) Representative: Aipex B.V.
(86) International application number: PCT/CN2022/125001
(87) International publication number: WO 2023/078050

(57) **Abstract**

Provided are an information transmission method, a device, and a storage medium. The information transmission method applied to a first communication node includes determining a DCI-related processing parameter in an multi-TRP scenario and sending the DCI-related processing parameter to a second communication node to enable the second communication node to process at least one of DCI, CSI, PUSCH bearer data, or PDSCH bearer data based on the DCI-related processing parameter.

## Description

### TECHNICAL FIELD

The present application relates to the field of communications, for example, an information transmission method, a device, and a storage medium

### BACKGROUND

In a wireless communication system, data can be transmitted in a single transmission and reception point (sTRP) scenario or a multiple transmission and reception points (multi-TRP) scenario. However, it is urgent to determine how to configure the physical downlink control channel (PDCCH) downlink control information (DCI) time length and the channel state information (CSI) time length of a user equipment (UE) in an multi-TRP scenario.

### SUMMARY

An embodiment of the present application provides an information transmission method applied to a first communication node. The method includes determining a downlink control information (DCI)-related processing parameter in a multiple transmission and reception points (multi-TRP) scenario and sending the DCI-related processing parameter to a second communication node to enable the second communication node to process a DCI-related parameter based on the DCI-related processing parameter.

An embodiment of the present application provides an information transmission method applied to a second communication node. The method includes receiving a downlink control information (DCI)-related processing parameter sent by a first communication node in a multiple transmission and reception points (multi-TRP) scenario and processing a DCI-related parameter based on the DCI-related processing parameter.

An embodiment of the present application provides a communication device. The device includes a communication module, a memory, and one or more processors.

The communication module is configured to perform a communicative interaction between a first communication node and a second communication node.

The memory is configured to store one or more programs.

The one or more processors are configured to perform the method of any previous embodiment when executing the one or more programs.

An embodiment of the present application provides a storage medium storing a computer program which, when executed by a processor, causes the processor to perform the method of any previous embodiment.

### BRIEF DESCRIPTION OF DRAWINGS

FIG. 1 is a flowchart of an information transmission method according to an embodiment of the present application.
FIG. 2 is a flowchart of another information transmission method according to an embodiment of the present application.
FIG. 3 is a diagram of an multi-TRP scenario according to an embodiment of the present application.
FIG. 4 is a configuration diagram of a CSI processing process according to the related art.
FIG. 5 is a diagram of another multi-TRP scenario according to an embodiment of the present application.
FIG. 6 is a diagram in which DCI schedules a PUSCH according to the related art.
FIG. 7 is a diagram in which DCI schedules a PDSCH HARQ-ACK according to the related art.
FIG. 8 is a block diagram of an information transmission apparatus according to an embodiment of the present application.
FIG. 9 is a block diagram of another information transmission apparatus according to an embodiment of the present application.
FIG. 10 is a diagram illustrating the structure of a communication device according to an embodiment of the present application.

### DETAILED DESCRIPTION

Embodiments of the present application are described hereinafter in conjunction with the drawings. The present application is described hereinafter in conjunction with the embodiments and the drawings. The examples listed hereinafter are merely intended to explain the present application and not to limit the scope of the present application.

A control channel named PDCCH is defined in a communication protocol of the related art. The PDCCH may be configured to send downlink scheduling information to a UE to enable the UE to receive a physical downlink shared channel (PDSCH); to send uplink scheduling information to the UE to enable the UE to send a physical uplink shared channel (PUSCH); and to send a CSI reporting request and an uplink power control command. Information carried on the PDCCH is referred to as DCI. A UE cannot acquire the precise time-frequency position of DCI transmission in advance and can only search a rough resource range for DCI, that is, can only perform a blind detection. The protocol specifies that a base station sends DCI. The DCI is carried on a PDCCH. After a UE detecting the PDCCH, the UE completes the processing of the DCI within a time length of s orthogonal frequency-division multiplexing (OFDM) symbols. The time length s is a restriction condition configured for the UE by the base station by using a signaling.

An information field in DCI is referred to as a CSI request. The CSI request is required to be triggered when a base station requires to acquire CSI of a UE. For a UE, CSI processing is a complex signal processing process that requires a huge number of computing resources and a certain computing time length. Therefore, to complete a basic CSI feedback process, a UE and a base station require to agree on the computing capability and processing delay of the UE.

However, DCI processing and CSI processing in the related art have problems in supporting multi-TRP transmission, that is, DCI processing time and CSI processing time configured for a UE by a base station are insufficient. As a result, the UE fails to demodulate DCI correctly and fails to report CSI accurately.

An embodiment of the present application provides an information transmission method in which a base station configures a DCI-related processing parameter and sends the DCI-related processing parameter to a UE to enable the UE to process DCI and CSI based on the DCI-related processing parameter.

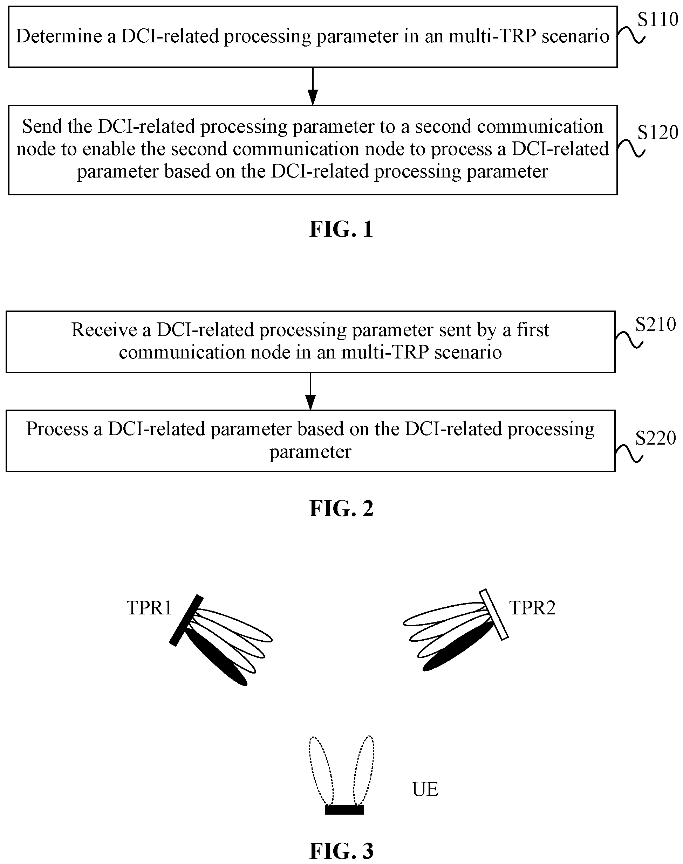

FIG. 1 is a flowchart of an information transmission method according to an embodiment of the present application. This embodiment may be performed by a first communication node. The first communication node may be a base station. As shown in FIG. 1, this embodiment includes S110 and S120.

In S110, a DCI-related processing parameter in an multi-TRP scenario is determined.

In S120, the DCI-related processing parameter is sent to a second communication node to enable the second communication node to process a DCI-related parameter based on the DCI-related processing parameter.

In an embodiment, the DCI-related processing parameter indicates a processing time length configured for the DCI-related parameter in the multi-TRP scenario. The DCI-related parameter includes at least one of DCI, CSI, PUSCH transmission data, or PDSCH transmission data. This may be construed as that the DCI may be used to schedule CSI reporting, a PUSCH, and a PDSCH. In an embodiment, scheduling a PUSCH by the DCI means scheduling PUSCH transmission data, and scheduling a PDSCH by the DCI means scheduling a PDSCH hybrid automatic repeat request acknowledgement (HARQ-ACK).

In an embodiment, the first communication node self-defines and configures, based on the feature of the multi-TRP scenario, a time length in which the DCI-related parameter is processed in the multi-TRP scenario; sends the configuration information of the time length to the second communication node to enable the second communication node to process the DCI within the preconfigured time length in the multi-TRP scenario; and/or schedules, by the DCI, data transmitted in different channels to ensure that the second communication node has sufficient processing time for processing the DCI-related parameter so that the second communication node can demodulate the DCI correctly and report the CSI accurately.

In an embodiment, the DCI-related processing parameter is configured for processing one piece of DCI and reporting one piece of CSI, and the DCI-related processing parameter includes a first CSI processing time length and a second CSI processing time length. The first CSI processing time length indicates the total number of OFDM symbols between decoding the DCI by the second communication node and reporting the CSI by the second communication node. The second CSI processing time length indicates the total number of OFDM symbols between measuring a channel state information reference signal (CSI-RS) by the second communication node and reporting the CSI by the second communication node. In an embodiment, that the DCI-related processing parameter is configured for processing one piece of DCI and reporting one piece of CSI may be construed as that a time length is configured for a CSI processing process so that the second communication node has sufficient processing time for operations including demodulating the DCI and reporting the CSI. In an embodiment, the first CSI processing time length indicates the total number of OFDM symbols between decoding the DCI by the second communication node and reporting the CSI by the second communication node in the multi-TRP scenario, and the second CSI processing time length indicates the total number of OFDM symbols between measuring a CSI-RS/channel state information interference measurement (CSI-IM) by the second communication node and reporting the CSI by the second communication node in the multi-TRP scenario. This may be construed as that the first CSI processing time length and the second CSI processing time length are indicated using the number of OFDM symbols.

In an embodiment, determining the DCI-related processing parameter in the multi-TRP scenario includes determining the first CSI processing time length in the multi-TRP scenario based on a third CSI processing time length and determining the second CSI processing time length in the multi-TRP scenario based on a fourth CSI processing time length. The third CSI processing time length indicates the total number of OFDM symbols between decoding the DCI by the second communication node and reporting the CSI in an sTRP scenario by the second communication node. The fourth CSI processing time length indicates the total number of OFDM symbols between measuring the CSI-RS by the second communication node and reporting the CSI in the sTRP scenario by the second communication node.

In an embodiment, the first CSI processing time length is the same as the third CSI processing time length, and the second CSI processing time length is the same as the fourth CSI processing time length. In an embodiment, the third CSI processing time length may serve as the first CSI processing time length in the multi-TRP scenario, that is, the total number of OFDM symbols between decoding the DCI by the second communication node and reporting the CSI by the second communication node in the multi-TRP scenario is the same as the total number of OFDM symbols between decoding the DCI by the second communication node and reporting the CSI by the second communication node in the sTRP scenario; and the fourth CSI processing time length may serve as the second CSI processing time length in the multi-TRP scenario, that is, the total number of OFDM symbols between measuring the CSI-RS/CSI-IM by the second communication node and reporting the CSI by the second communication node in the multi-TRP scenario is the same as the total number of OFDM symbols between measuring the CSI-RS by the second communication node and reporting the CSI by the second communication node in the sTRP scenario. Of course, these CSI processing time lengths may be different from each other.

In an embodiment, the first CSI processing time length is different from the third CSI processing time length, and the second CSI processing time length is different from the fourth CSI processing time length.

In an embodiment, determining the DCI-related processing parameter in the multi-TRP scenario includes determining the first CSI processing time length in the multi-TRP scenario based on a third CSI processing time length and a first number of OFDM symbols and determining the second CSI processing time length in the multi-TRP scenario based on a fourth CSI processing time length and a second number of OFDM symbols. In an embodiment, the sum of the first number of OFDM symbols and the number of OFDM symbols contained in the third CSI processing time length serves as the first CSI processing time length, and the sum of the second number of OFDM symbols and the number of OFDM symbols contained in the fourth CSI processing time length serves as the second CSI processing time length. In an embodiment, the first number of OFDM symbols may be the same as or different from the second number of OFDM symbols. This is not limited by this embodiment.

In an embodiment, the first number of OFDM symbols and the second number of OFDM symbols are each related to one of the following parameters: the number of CMR pairs in the multi-TRP scenario, the total number of CMRs in the multi-TRP scenario; a CSI reporting mode in the multi-TRP scenario; a CMR sharing relationship in the multi-TRP scenario; or the total number of pieces of CSI in an sTRP scenario.

In an embodiment, the DCI-related processing parameter is configured for processing two pieces of DCI, where the DCI is configured for scheduling PUSCH bearer data, and the DCI-related processing parameter includes a first DCI processing time length and a second DCI processing time length. The first DCI processing time length indicates the total number of OFDM symbols between receiving the DCI by the second communication node and demodulating the PUSCH bearer data in the DCI by the second communication node. The second DCI processing time length indicates the total number of OFDM symbols between receiving the DCI by the second communication node and scheduling a PUSCH by the second communication node. In an embodiment, that the DCI-related processing parameter is configured for processing two pieces of DCI and the DCI is configured for scheduling a PUSCH by the second communication node may be construed as that a time length is configured for a process of processing the two pieces of DCI and a process of scheduling the PUSCH so that the second communication node has sufficient processing time for operations including demodulating the DCI and scheduling the PUSCH. In an embodiment, the first DCI processing time length indicates the total number of OFDM symbols between receiving the DCI by the second communication node and demodulating the PUSCH bearer data in the DCI by the second communication node in the multi-TRP scenario, and the second DCI processing time length indicates the total number of OFDM symbols between receiving the DCI by the second communication node and scheduling a PUSCH by the second communication node in the multi-TRP scenario. This may be construed as that the first DCI processing time length and the second DCI processing time length are indicated using the number of OFDM symbols.

In an embodiment, determining the DCI-related processing parameter in the multi-TRP scenario includes determining the first DCI processing time length in the multi-TRP scenario based on a third DCI processing time length and determining the second DCI processing time length in the multi-TRP scenario based on a fourth DCI processing time length. The third DCI processing time length indicates the total number of OFDM symbols between receiving the DCI by the second communication node and demodulating the PUSCH bearer data by the second communication node in the DCI in an sTRP scenario. The fourth DCI processing time length indicates the total number of OFDM symbols between receiving the DCI by the second communication node and scheduling the PUSCH by the second communication node in the sTRP scenario.

In an embodiment, the first DCI processing time length is the same as the third DCI processing time length, and the second DCI processing time length is the same as the fourth DCI processing time length.

In an embodiment, the first DCI processing time length is different from the third DCI processing time length, and the second DCI processing time length is different from the fourth DCI processing time length.

In an embodiment, determining the DCI-related processing parameter in the multi-TRP scenario includes determining the first DCI processing time length in the multi-TRP scenario based on a third DCI processing time length and a third number of OFDM symbols and determining the second DCI processing time length in the multi-TRP scenario based on a fourth DCI processing time length and a fourth number of OFDM symbols. In an embodiment, the sum of the third number of OFDM symbols and the number of OFDM symbols contained in the third DCI processing time length serves as the first DCI processing time length, and the sum of the fourth number of OFDM symbols and the number of OFDM symbols contained in the fourth DCI processing time length serves as the second DCI processing time length. In an embodiment, the third number of OFDM symbols may be the same as or different from the fourth number of OFDM symbols. This is not limited by this embodiment.

In an embodiment, the third number of OFDM symbols and the fourth number of OFDM symbols are each related to one of the following parameters: the number of candidate PDCCHs in a search space or the number of blind detections. In an embodiment, the number of candidate PDCCHs in the search space refers to the total number of PDCCHs in the search space. The number of blind detections refers to the total number of detections of DCI by the UE in a rough resource range.

In an embodiment, the DCI-related processing parameter is configured for processing two pieces of DCI, where the DCI is configured for scheduling a PDSCH HARQ-ACK, and the DCI-related processing parameter includes a fifth DCI processing time length and a sixth DCI processing time length. The fifth DCI processing time length indicates the total number of OFDM symbols between receiving the DCI by the second communication node and demodulating PDSCH bearer data in the DCI by the second communication node. The sixth DCI processing time length indicates the total number of OFDM symbols between receiving the DCI by the second communication node and scheduling the PDSCH HARQ-ACK by the second communication node. In an embodiment, that the DCI-related processing parameter is configured for processing two pieces of DCI and the DCI is configured for scheduling a PDSCH HARQ-ACK by the second communication node may be construed as that a time length is configured for a process of processing the two pieces of DCI and a process of scheduling the PDSCH so that the second communication node has sufficient processing time for operations including demodulating the DCI and scheduling the PDSCH HARQ-ACK. In an embodiment, the fifth DCI processing time length indicates the total number of OFDM symbols between receiving the DCI by the second communication node and demodulating the PDSCH bearer data in the DCI by the second communication node in the multi-TRP scenario, and the second DCI processing time length indicates the total number of OFDM symbols between receiving the DCI by the second communication node and scheduling a PDSCH HARQ-ACK by the second communication node in the multi-TRP scenario. This may be construed as that the fifth DCI processing time length and the sixth DCI processing time length are indicated using the number of OFDM symbols.

In an embodiment, determining the DCI-related processing parameter in the multi-TRP scenario includes determining the fifth DCI processing time length in the multi-TRP scenario based on a seventh DCI processing time length and determining the sixth DCI processing time length in the multi-TRP scenario based on an eighth DCI processing time length. The seventh DCI processing time length indicates the total number of OFDM symbols between receiving the DCI by the second communication node and demodulating the PDSCH bearer data by the second communication node in the DCI in an sTRP scenario. The eighth DCI processing time length indicates the total number of OFDM symbols between receiving the DCI by the second communication node and scheduling the PDSCH HARQ-ACK by the second communication node in the sTRP scenario.

In an embodiment, the fifth DCI processing time length is the same as the seventh DCI processing time length, and the sixth DCI processing time length is the same as the eighth DCI processing time length.

In an embodiment, the fifth DCI processing time length is different from the seventh DCI processing time length, and the sixth DCI processing time length is different from the eighth DCI processing time length.

In an embodiment, determining the DCI-related processing parameter in the multi-TRP scenario includes determining the fifth DCI processing time length in the multi-TRP scenario based on a seventh DCI processing time length and a fifth number of OFDM symbols and determining the sixth DCI processing time length in the multi-TRP scenario based on an eighth DCI processing time length and a sixth number of OFDM symbols. In an embodiment, the sum of the fifth number of OFDM symbols and the number of OFDM symbols contained in the seventh DCI processing time length serves as the fifth DCI processing time length, and the sum of the sixth number of OFDM symbols and the number of OFDM symbols contained in the eighth DCI processing time length serves as the sixth DCI processing time length. In an embodiment, the fifth number of OFDM symbols may be the same as or different from the sixth number of OFDM symbols. This is not limited by this embodiment.

In an embodiment, the fifth number of OFDM symbols and the sixth number of OFDM symbols are each related to one of the following parameters: the number of candidate PDCCHs in a search space or the number of blind detections.

FIG. 2 is a flowchart of another information transmission method according to an embodiment of the present application. This embodiment may be performed by a second communication node. The second communication node may be a UE. As shown in FIG. 2, this embodiment includes S210 and S220.

In S210, a DCI-related processing parameter sent by a first communication node in an multi-TRP scenario is received.

In S220, a DCI-related parameter is processed based on the DCI-related processing parameter.

In an embodiment, the DCI-related processing parameter is configured for processing one piece of DCI and reporting one piece of CSI, and the DCI-related processing parameter includes a first CSI processing time length and a second CSI processing time length. The first CSI processing time length indicates the total number of OFDM symbols between decoding the DCI by the second communication node and reporting the CSI by the second communication node. The second CSI processing time length indicates the total number of OFDM symbols between measuring a CSI-RS by the second communication node and reporting the CSI by the second communication node.

In an embodiment, the DCI-related processing parameter is determined in the following manners: determining the first CSI processing time length in the multi-TRP scenario based on a third CSI processing time length and determining the second CSI processing time length in the multi-TRP scenario based on a fourth CSI processing time length. The third CSI processing time length indicates the total number of OFDM symbols between decoding the DCI by the second communication node and reporting the CSI by the second communication node in an sTRP scenario. The fourth CSI processing time length indicates the total number of OFDM symbols between measuring the CSI-RS by the second communication node and reporting the CSI by the second communication node in the sTRP scenario.

In an embodiment, the first CSI processing time length is the same as the third CSI processing time length, and the second CSI processing time length is the same as the fourth CSI processing time length.

In an embodiment, the first CSI processing time length is different from the third CSI processing time length, and the second CSI processing time length is different from the fourth CSI processing time length.

In an embodiment, the DCI-related processing parameter is determined in the following manners: determining the first CSI processing time length in the multi-TRP scenario based on a third CSI processing time length and a first number of OFDM symbols and determining the second CSI processing time length in the multi-TRP scenario based on a fourth CSI processing time length and a second number of OFDM symbols.

In an embodiment, the first number of OFDM symbols and the second number of OFDM symbols are each related to one of the following parameters: the number of CMR pairs in the multi-TRP scenario, the total number of CMRs in the multi-TRP scenario; a CSI reporting mode in the multi-TRP scenario; a CMR sharing relationship in the multi-TRP scenario; or the total number of pieces of CSI in an sTRP scenario.

In an embodiment, the DCI-related processing parameter is configured for processing two pieces of DCI, where the DCI is configured for scheduling PUSCH bearer data, and the DCI-related processing parameter includes a first DCI processing time length and a second DCI processing time length. The first DCI processing time length indicates the total number of OFDM symbols between receiving the DCI by the second communication node and demodulating the PUSCH bearer data in the DCI by the second communication node. The second DCI processing time length indicates the total number of OFDM symbols between receiving the DCI by the second communication node and scheduling a PUSCH by the second communication node.

In an embodiment, the DCI-related processing parameter is determined in the following manners: determining the first DCI processing time length in the multi-TRP scenario based on a third DCI processing time length and determining the second DCI processing time length in the multi-TRP scenario based on a fourth DCI processing time length. The third DCI processing time length indicates the total number of OFDM symbols between receiving the DCI by the second communication node and demodulating the PUSCH bearer data by the second communication node in the DCI in an sTRP scenario. The fourth DCI processing time length indicates the total number of OFDM symbols between receiving the DCI by the second communication node and scheduling the PUSCH by the second communication node in the sTRP scenario.

In an embodiment, the first DCI processing time length is the same as the third DCI processing time length, and the second DCI processing time length is the same as the fourth DCI processing time length.

In an embodiment, the first DCI processing time length is different from the third DCI processing time length, and the second DCI processing time length is different from the fourth DCI processing time length.

In an embodiment, the DCI-related processing parameter is determined in the following manners: determining the first DCI processing time length in the multi-TRP scenario based on a third DCI processing time length and a third number of OFDM symbols and determining the second DCI processing time length in the multi-TRP scenario based on a fourth DCI processing time length and a fourth number of OFDM symbols.

In an embodiment, the third number of OFDM symbols and the fourth number of OFDM symbols are each related to one of the following parameters: the number of candidate PDCCHs in a search space or the number of blind detections.

In an embodiment, the DCI-related processing parameter is configured for processing two pieces of DCI, where the DCI is configured for scheduling a PDSCH HARQ-ACK, and the DCI-related processing parameter includes a fifth DCI processing time length and a sixth DCI processing time length. The fifth DCI processing time length indicates the total number of OFDM symbols between receiving the DCI by the second communication node and demodulating PDSCH bearer data in the DCI by the second communication node. The sixth DCI processing time length indicates the total number of OFDM symbols between receiving the DCI by the second communication node and scheduling the PDSCH HARQ-ACK by the second communication node.

In an embodiment, the DCI-related processing parameter is determined in the fllowing manners: determining the fifth DCI processing time length in the multi-TRP scenario based on a seventh DCI processing time length and determining the sixth DCI processing time length in the multi-TRP scenario based on an eighth DCI processing time length. The seventh DCI processing time length indicates the total number of OFDM symbols between receiving the DCI by the second communication node and demodulating the PDSCH bearer data in the DCI by the second communication node in an sTRP scenario. The eighth DCI processing time length indicates the total number of OFDM symbols between receiving the DCI by the second communication node and scheduling the PDSCH HARQ-ACK by the second communication node in the sTRP scenario.

In an embodiment, the fifth DCI processing time length is the same as the seventh DCI processing time length, and the sixth DCI processing time length is the same as the eighth DCI processing time length.

In an embodiment, the fifth DCI processing time length is different from the seventh DCI processing time length, and the sixth DCI processing time length is different from the eighth DCI processing time length.

In an embodiment, determining the DCI-related processing parameter includes determining the fifth DCI processing time length in the multi-TRP scenario based on a seventh DCI processing time length and a fifth number of OFDM symbols and determining the sixth DCI processing time length in the multi-TRP scenario based on an eighth DCI processing time length and a sixth number of OFDM symbols.

In an embodiment, the fifth number of OFDM symbols and the sixth number of OFDM symbols are each related to one of the following parameters: the number of candidate PDCCHs in a search space or the number of blind detections.

Explanations of the DCI-related processing parameter, the DCI-related parameter, and parameters contained in the DCI-related processing parameter in the information transmission method applied to the second communication node are the same as those in the information transmission method applied to the first communication node and thus are not described again here.

In an embodiment, the configuration process of the DCI-related processing parameter is described by using an example in which one piece of DCI is processed, one piece of CSI is reported, the first communication node is a base station (for example, TRP1 or TRP12), and the second communication node is a UE. FIG. 3 is a diagram of an multi-TRP scenario according to an embodiment of the present application. In the multi-TRP scenario, the base stations are configured with Kₛ channel measurement resources (CMRs) for channel measurement. The base station TRP1 is configured with one group. This group is denoted as CMR group 1 that includes K₁ CMRs. The base station TRP2 is configured with another group. This group is denoted as CMR group 2 that includes K₂ CMRs. K₁ + K₂ = Kₛ. The base stations are configured with parameter N through a signaling. N indicates the number of CMR pairs in the multi-TRP scenario. CMRs in each CMR pair are from different CMR groups. As shown in FIG. 3, the base stations are configured with 8 CMRs. CMR group 1 contains 4 CMRs sent by TRP1. CMR group 2 contains 4 CMRs sent by TRP2. When N = 1, one CMR in CMR group 1 and one CMR in CMR group 2 form a pair.

The base stations may be configured with a CMR sharing relationship through a signaling to indicate whether paired CMRs may be used for CSI measurement of sTRP. When the sharing relationship is enabled, paired CMRs may be used for CSI measurement of multi-TRP and CSI measurement of sTRP. When the sharing relationship is not enabled, paired CMRs may be used for CSI measurement of only multi-TRP.

The base stations are configured with a CSI reporting mode of a UE through a signaling. Mode 1 indicates that the UE needs to report one piece of CSI associated with multi-TRP and X pieces of CSI associated with sTRP. Here X = 2, 1, 0. Mode 2 indicates that the UE needs to report one piece of CSI that may be associated with multi-TRP or sTRP.

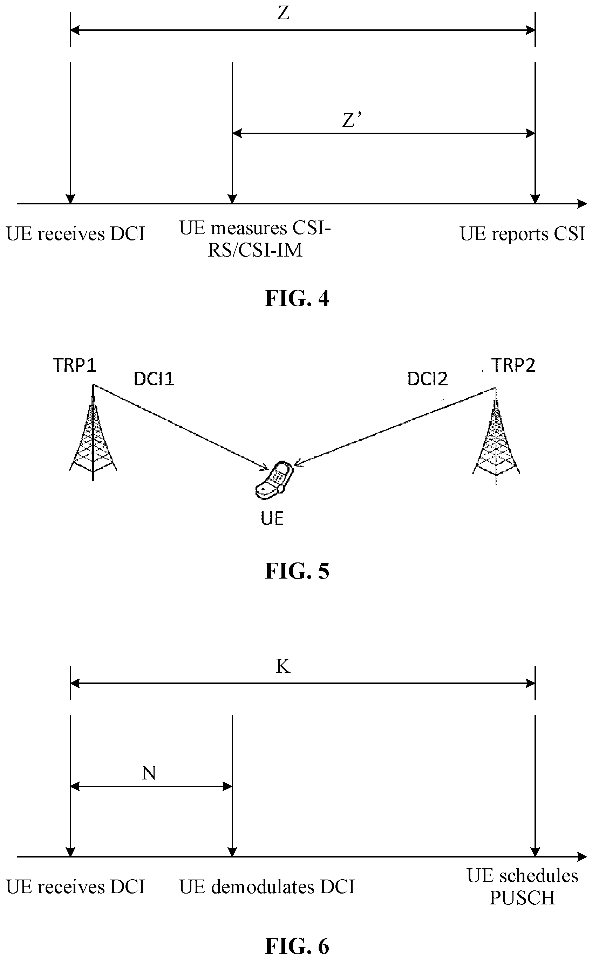

FIG. 4 is a configuration diagram of a CSI processing process according to the related art. As shown in FIG. 4, a CSI processing process in a communication protocol of the related art includes that a UE decodes DCI on a PDCCH, measures a CSI-RS/CSI-IM, and reports CSI. A base station configures constraints Z and Z' for the time length the UE processes the CSI. Z indicates the number (that is, the third CSI processing time length in the previous embodiments) of OFDM symbols between decoding the DCI by the UE and reporting the CSI by the UE in an sTRP scenario. Z' indicates the number (that is, the fourth CSI processing time length in the previous embodiments) of OFDM symbols between measuring the CSI-RS/CSI-IM by the UE and reporting the CSI by the UE in the sTRP scenario.

Time length Z and time length Z' in the protocol of the related art may not satisfy a more complex CSI processing by a UE in an multi-TRP scenario. To solve this problem, an embodiment of the present application provides eight methods hereinafter.

Method one: Protocol rules of the related art are used.

In the multi-TRP scenario, the time length the UE processes CSI uses protocol rules of the related art and is configured with constraints Z and Z' by a base station. Z indicates the number of OFDM symbols between decoding DCI by the UE and reporting the CSI by the UE. Z' indicates the number of OFDM symbols between measuring a CSI-RS/CSI-IM by the UE and reporting the CSI by the UE. Z and Z' serve as constraints for CSI processing by the UE.

Method two: Another set of rules are configured.

In an sTRP scenario, the time length the UE processes CSI uses protocol rules of the related art and is configured with constraints Z and Z' by a base station. Z indicates the number of OFDM symbols between decoding DCI by the UE and reporting the CSI by the UE. Z' indicates the number of OFDM symbols between measuring a CSI-RS/CSI-IM by the UE and reporting the CSI by the UE. Z and Z' serve as constraints for CSI processing by the UE.

In the multi-TRP scenario, the time length the UE processes the CSI uses other rules and is configured with constraints Zₘ and Z'ₘ, by the base station. Zₘ indicates the number (that is, the first CSI processing time length in the previous embodiments) of OFDM symbols between decoding the DCI by the UE and reporting the CSI by the UE. Z'ₘ indicates the number (that is, the second CSI processing time length in the previous embodiments) of OFDM symbols between measuring the CSI-RS/CSI-IM by the UE and reporting the CSI by the UE. Zₘ and Z'ₘ, serve as constraints for CSI processing by the UE.

Method three: x OFDM symbols are added.

In an sTRP scenario, the time length the UE processes CSI uses protocol rules of the related art and is configured with constraints Z and Z' by a base station. Z indicates the number of OFDM symbols between decoding DCI by the UE and reporting the CSI by the UE. Z' indicates the number of OFDM symbols between measuring a CSI-RS/CSI-IM by the UE and reporting the CSI by the UE. Z and Z' serve as constraints for CSI processing by the UE.

In the multi-TRP scenario, the time length the UE processes the CSI is configured with more constraints and is configured with two additional parameters, x and x' in addition to the protocol of the related art, that is, the time length the UE processes the CSI is configured with constraints Z and Z' and parameters x and x' by the base station.

The number (that is, the first CSI processing time length in the previous embodiments) of OFDM symbols between decoding the DCI by the UE and reporting the CSI by the UE is Z + x. The number (that is, the second CSI processing time length in the previous embodiments) of OFDM symbols between measuring the CSI-RS/CSI-IM by the UE and reporting the CSI by the UE is Z + x'. Parameters x and x' as well as Z and Z' serve as constraints for CSI processing by the UE.

Method four: x OFDM symbols are added, and x is related to the number (N) of pairs.

In an sTRP scenario, the time length the UE processes CSI uses protocol rules of the related art and is configured with constraints Z and Z' by a base station. Z indicates the number of OFDM symbols between decoding DCI by the UE and reporting the CSI by the UE. Z' indicates the number of OFDM symbols between measuring a CSI-RS/CSI-IM by the UE and reporting the CSI by the UE. Z and Z' serve as constraints for CSI processing by the UE.

In the multi-TRP scenario, the time length the UE processes the CSI is configured with more constraints and is configured with two additional parameters, x and x' in addition to the protocol of the related art, that is, the time length the UE processes the CSI is configured with constraints Z and Z' and parameters x and x' by the base station.

The values of parameters x and x' are related to the value of the number (N) of pairs. For example, if N = 1, then x = c, and x' = c'; if N = 2, then x = 2c, and x' = 2c'; and if N = 3, then x = 3c, and x' = 3c'. c and c' are constants.

The number (that is, the first CSI processing time length in the previous embodiments) of OFDM symbols between decoding the DCI by the UE and reporting the CSI by the UE is Z + x. The number (that is, the second CSI processing time length in the previous embodiments) of OFDM symbols between measuring the CSI-RS/CSI-IM by the UE and reporting the CSI by the UE is Z + x'. Parameters x and x' as well as Z and Z' serve as constraints for CSI processing by the UE.

Method five: x OFDM symbols are added, and x is related to the total number (Kₛ) of CMRs.

In an sTRP scenario, the time length the UE processes CSI uses protocol rules of the related art and is configured with constraints Z and Z' by a base station. Z indicates the number of OFDM symbols between decoding DCI by the UE and reporting the CSI by the UE. Z' indicates the number of OFDM symbols between measuring a CSI-RS/CSI-IM by the UE and reporting the CSI by the UE. Z and Z' serve as constraints for CSI processing by the UE.

In the multi-TRP scenario, the time length the UE processes the CSI is configured with more constraints in addition to the protocol of the related art, that is, the time length the UE processes the CSI is configured with constraints Z and Z' and parameters x and x' by the base station.

The values of parameters x and x' are related to the value of the total number (Kₛ) of CMRs. For example, if Kₛ = 2, then x = 2c, and x' = 2c'; if Kₛ = 4, then x = 4c, and x' = 4c'; and if Kₛ = 8, then x = 8c, and x' = 8c'. c and c' are constants.

The number (that is, the first CSI processing time length in the previous embodiments) of OFDM symbols between decoding the DCI by the UE and reporting the CSI by the UE is Z + x. The number (that is, the second CSI processing time length in the previous embodiments) of OFDM symbols between measuring the CSI-RS/CSI-IM by the UE and reporting the CSI by the UE is Z + x'. Parameters x and x' as well as Z and Z' serve as constraints for CSI processing by the UE.

Method six: x OFDM symbols are added, and x is related to the reporting mode.

In an sTRP scenario, the time length the UE processes CSI uses protocol rules of the related art and is configured with constraints Z and Z' by a base station. Z indicates the number of OFDM symbols between decoding DCI by the UE and reporting the CSI by the UE. Z' indicates the number of OFDM symbols between measuring a CSI-RS/CSI-IM by the UE and reporting the CSI by the UE. Z and Z' serve as constraints for CSI processing by the UE.

In the multi-TRP scenario, the time length the UE processes the CSI is configured with more constraints and is configured with two additional parameters, x and x' in addition to the protocol of the related art, that is, the time length the UE processes the CSI is configured with constraints Z and Z' and parameters x and x' by the base station.

The values of parameters x and x' are related to CSI reporting mode 1 and CSI reporting mode 2. For example, if the CSI reporting mode is mode 1, then x = c1, and x' = c1'; and if the CSI reporting mode is mode 2, then x = c2, and x' = c2'. c1, c1', c2 and c2' are constants.

The number (that is, the first CSI processing time length in the previous embodiments) of OFDM symbols between decoding the DCI by the UE and reporting the CSI by the UE is Z + x. The number (that is, the second CSI processing time length in the previous embodiments) of OFDM symbols between measuring the CSI-RS/CSI-IM by the UE and reporting the CSI by the UE is Z' + x'. Parameters x and x' as well as Z and Z' serve as constraints for CSI processing by the UE.

Method seven: x OFDM symbols are added, and x is related to whether CMR share is enabled.

In an sTRP scenario, the time length the UE processes CSI uses protocol rules of the related art and is configured with constraints Z and Z' by a base station. Z indicates the number of OFDM symbols between decoding DCI by the UE and reporting the CSI by the UE. Z' indicates the number of OFDM symbols between measuring a CSI-RS/CSI-IM by the UE and reporting the CSI by the UE. Z and Z' serve as constraints for CSI processing by the UE.

In the multi-TRP scenario, the time length the UE processes the CSI is configured with more constraints and is configured with two additional parameters, x and x' in addition to the protocol of the related art, that is, the time length the UE processes the CSI is configured with constraints Z and Z' and parameters x and x' by the base station.

The values of parameters x and x' are related to whether CMR share is enabled in a CMR pair. For example, if CMR share is enabled, then x = c1, and x' = c1'; and if CMR share is not enabled, then x = c2, and x' = c2'. c1, c1', c2, and c2' are constants.

The number (that is, the first CSI processing time length in the previous embodiments) of OFDM symbols between decoding the DCI by the UE and reporting the CSI by the UE is Z + x. The number (that is, the second CSI processing time length in the previous embodiments) of OFDM symbols between measuring the CSI-RS/CSI-IM by the UE and reporting the CSI by the UE is Z' + x'. Parameters x and x' as well as Z and Z' serve as constraints for CSI processing by the UE.

Method eight: x OFDM symbols are added, and x is related to the number (X) of pieces of sTRP CSI.

In an sTRP scenario, the time length the UE processes CSI uses protocol rules of the related art and is configured with constraints Z and Z' by a base station. Z indicates the number of OFDM symbols between decoding DCI by the UE and reporting the CSI by the UE. Z' indicates the number of OFDM symbols between measuring a CSI-RS/CSI-IM by the UE and reporting the CSI by the UE. Z and Z' serve as constraints for CSI processing by the UE.

In the multi-TRP scenario, the time length the UE processes the CSI is configured with more constraints and is configured with two additional parameters, x and x' in addition to the protocol of the related art, that is, the time length the UE processes the CSI is configured with constraints Z and Z' and parameters x and x' by the base station.

The values of parameters x and x' are related to the value of the number (X) of pieces of sTRP CSI. For example, if X = 0, then x = c0, and x' = c0'; if X =1, then x = c1, and x' = c1'; if X = 2, then x = c2, and x' = c2'; and if the base station does not configure parameter X, then x = c3, and x' = c3'. c1, c1', c2, c2', c3 and c3' are constants.

The number (that is, the first CSI processing time length in the previous embodiments) of OFDM symbols between decoding the DCI by the UE and reporting the CSI by the UE is Z + x. The number (that is, the second CSI processing time length in the previous embodiments) of OFDM symbols between measuring the CSI-RS/CSI-IM by the UE and reporting the CSI by the UE is Z' + x'. Parameters x and x' as well as Z and Z' serve as constraints for CSI processing by the UE.

In an embodiment, the configuration process of the DCI-related processing parameter is described by using an example in which the same two pieces of DCI are processed, the first communication node is a base station, and the second communication node is a UE. FIG. 5 is a diagram of another multi-TRP scenario according to an embodiment of the present application. As shown in FIG. 5, in an multi-TRP scenario, base station TRP1 sends one piece of DCI1, and base station TRP2 sends one piece of DCI2. DCI1 and DCI2 are carried in a PDCCH. DCI1 and DCI2 carry the same information but are located at different time-frequency positions of the PDCCH.

FIG. 6 is a diagram in which DCI schedules a PUSCH according to the related art. As shown in FIG. 6, in a communication protocol of the related art, a process of scheduling a PUSCH by DCI includes that a UE receives the DCI, demodulates information in the DCI, and schedules the PUSCH. A base station configures constraints N and K for DCI demodulation by the UE and PUSCH scheduling by the UE. N indicates the number (that is, the third DCI processing time length in the previous embodiments) of OFDM symbols between receiving the DCI by the UE and demodulating information in the DCI by the UE in an sTRP scenario. K indicates the number (that is, the fourth DCI processing time length in the previous embodiments) of OFDM symbols between receiving the DCI by the UE and scheduling the PUSCH by the UE in the sTRP scenario.

Time length N and time length K in the protocol of the related art may not satisfy a more complex DCI processing by a UE, that is, PUSCH scheduling by DCI, in an multi-TRP scenario. To solve this problem, an embodiment of the present application provides five methods hereinafter.

Method one: Protocol rules of the related art are used.

In the multi-TRP scenario, the time length the UE schedules a PUSCH by using the DCI uses protocol rules of the related art and is configured with constraints N and K by a base station. N indicates the number (that is, the first DCI processing time length in the previous embodiments) of OFDM symbols between receiving the DCI by the UE and demodulating information in the DCI by the UE in the multi-TRP scenario. K indicates the number (that is, the second DCI processing time length in the previous embodiments) of OFDM symbols between receiving the DCI by the UE and scheduling the PUSCH by the UE in the multi-TRP scenario. N and K serve as constraints for PUSCH scheduling by the UE.

Method two: Another set of rules are configured.

In an sTRP scenario, the time length the UE schedules a PUSCH by using the DCI uses protocol rules of the related art and is configured with constraints N and K by a base station. N indicates the number of OFDM symbols between receiving the DCI by the UE and demodulating information in the DCI by the UE. K indicates the number of OFDM symbols between receiving the DCI by the UE and scheduling the PUSCH by the UE. N and K serve as constraints for PUSCH scheduling by the UE.

In the multi-TRP scenario, the time length the UE schedules the PUSCH by using the DCI uses other rules and is configured with constraints Nm and Km by the base station. Nm indicates the number (that is, the first DCI processing time length in the previous embodiments) of OFDM symbols between receiving the DCI by the UE and demodulating information in the DCI by the UE. Km indicates the number (that is, the second DCI processing time length in the previous embodiments) of OFDM symbols between receiving the DCI by the UE and scheduling the PUSCH by the UE. Nm and Km serve as constraints for PUSCH scheduling by the UE.

Method three: x OFDM symbols are added.

In an sTRP scenario, the time length the UE schedules a PUSCH by using the DCI uses protocol rules of the related art and is configured with constraints N and K by a base station. N indicates the number of OFDM symbols between receiving the DCI by the UE and demodulating information in the DCI by the UE. K indicates the number of OFDM symbols between receiving the DCI by the UE and scheduling the PUSCH by the UE. N and K serve as constraints for PUSCH scheduling by the UE.

In the multi-TRP scenario, the time length the UE schedules the PUSCH is configured with more constraints and is configured with two additional parameters, x and x' in addition to the protocol of the related art, that is, the time length the UE schedules the PUSCH is configured with constraints N and K and parameters x and x' by the base station.

The number (that is, the first DCI processing time length in the previous embodiments) of OFDM symbols between receiving the DCI by the UE and demodulating information in the DCI by the UE is N + x. The number (that is, the second DCI processing time length in the previous embodiments) of OFDM symbols between receiving the DCI by the UE and scheduling the PUSCH by the UE is K + x'. Parameters x and x' as well as N and K serve as constraints for CSI processing by the UE.

Method four: x OFDM symbols are added, and x is related to the number (N1) of candidates.

In an sTRP scenario, the time length the UE schedules a PUSCH by using the DCI uses protocol rules of the related art and is configured with constraints N and K by a base station. N indicates the number of OFDM symbols between receiving the DCI by the UE and demodulating information in the DCI by the UE. K indicates the number of OFDM symbols between receiving the DCI by the UE and scheduling the PUSCH by the UE. N and K serve as constraints for PUSCH scheduling by the UE. N1 indicates the number of candidate PDCCHs in a search space.

In the multi-TRP scenario, the time length the UE schedules the PUSCH is configured with more constraints and is configured with two additional parameters, x and x' in addition to the protocol of the related art, that is, the time length the UE schedules the PUSCH is configured with constraints N and K and parameters x and x' by the base station.

The values of parameters x and x' are related to the value of the number (N1) of candidates. For example, if N1 = 1, then x = c, and x' = c'; if N1 = 2, then x = 2c, and x' = 2c'; and if N1 = 3, then x = 3c, and x' = 3c'. c and c' are constants.

The number (that is, the first DCI processing time length in the previous embodiments) of OFDM symbols between receiving the DCI by the UE and demodulating information in the DCI by the UE is N + x. The number (that is, the second DCI processing time length in the previous embodiments) of OFDM symbols between receiving the DCI by the UE and scheduling the PUSCH by the UE is K + x'. Parameters x and x' as well as N and K serve as constraints for CSI processing by the UE.

Method five: x OFDM symbols are added, and x is related to the number of blind detections (BD number).

In an sTRP scenario, the time length the UE schedules a PUSCH by using the DCI uses protocol rules of the related art and is configured with constraints N and K by a base station. N indicates the number of OFDM symbols between receiving the DCI by the UE and demodulating information in the DCI by the UE. K indicates the number of OFDM symbols between receiving the DCI by the UE and scheduling the PUSCH by the UE. N and K serve as constraints for PUSCH scheduling by the UE.

In the multi-TRP scenario, the time length the UE schedules the PUSCH is configured with more constraints and is configured with two additional parameters, x and x' in addition to the protocol of the related art, that is, the time length the UE schedules the PUSCH is configured with constraints N and K and parameters x and x' by the base station.

The values of parameters x and x' are related to the value of the BD number. For example, if BD number = 1, then x = c, and x' = c'; if BD number = 2, then x = 2c, and x' = 2c'; and if BD number = 3, then x = 3c, and x' = 3c'. c and c' are constants.

The number (that is, the first DCI processing time length in the previous embodiments) of OFDM symbols between receiving the DCI by the UE and demodulating information in the DCI by the UE is N + x. The number (that is, the second DCI processing time length in the previous embodiments) of OFDM symbols between receiving the DCI by the UE and scheduling the PUSCH by the UE is K + x'. Parameters x and x' as well as N and K serve as constraints for CSI processing by the UE.

In an embodiment, the configuration process of the DCI-related processing parameter is described by using an example in which the same two pieces of DCI are processed, the first communication node is a base station, and the second communication node is a UE. As shown in FIG. 5, in an multi-TRP scenario, base station TRP1 sends one piece of DCI1, and base station TRP2 sends one piece of DCI2. DCI1 and DCI2 are carried in a PDCCH. DCI1 and DCI2 carry the same information but are located at different time-frequency positions of the PDCCH.

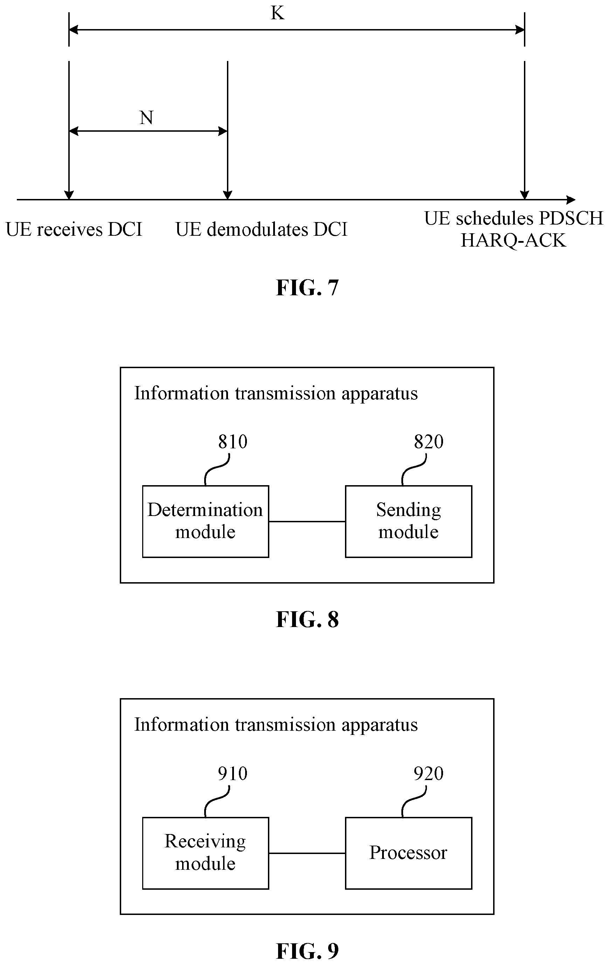

FIG. 7 is a diagram in which DCI schedules a PDSCH HARQ-ACK according to the related art. As shown in FIG. 7, in a communication protocol of the related art, a process of scheduling a PDSCH HARQ-ACK by DCI includes that a UE receives the DCI, demodulates information in the DCI, and schedules the PDSCH HARQ-ACK. A base station configures constraints N and K for DCI demodulation by the UE and PDSCH HARQ-ACK scheduling by the UE. N indicates the number (that is, the seventh DCI processing time length in the previous embodiments) of OFDM symbols between receiving the DCI by the UE and demodulating information in the DCI by the UE. K indicates the number (that is, the eighth DCI processing time length in the previous embodiments) of OFDM symbols between receiving the DCI by the UE and scheduling the PDSCH HARQ-ACK by the UE.

Time length N and time length K in the protocol of the related art may not satisfy a more complex DCI processing by a UE, that is, PDSCH HARQ-ACK scheduling by DCI, in an multi-TRP scenario. To solve this problem, an embodiment of the present application provides five methods hereinafter.

Method one: Protocol rules of the related art are used.

In the multi-TRP scenario, the time length the UE schedules a PDSCH HARQ-ACK by using the DCI uses protocol rules of the related art and is configured with constraints N and K by a base station. N indicates the number of OFDM symbols between receiving the DCI by the UE and demodulating information in the DCI by the UE. K indicates the number of OFDM symbols between receiving the DCI by the UE and scheduling the PDSCH HARQ-ACK by the UE. N and K serve as constraints for PUSCH scheduling by the UE.

Method two: Another set of rules are configured.

In the sTRP scenario, the time length the UE schedules a PDSCH HARQ-ACK by using the DCI uses protocol rules of the related art and is configured with constraints N and K by a base station. N indicates the number of OFDM symbols between receiving the DCI by the UE and demodulating information in the DCI by the UE. K indicates the number of OFDM symbols between receiving the DCI by the UE and scheduling the PDSCH HARQ-ACK by the UE. N and K serve as constraints for PDSCH HARQ-ACK scheduling by the UE.

In the multi-TRP scenario, the time length the UE schedules the PDSCH HARQ-ACK by using the DCI uses other rules and is configured with constraints Nm and Km by the base station. Nm indicates the number (that is, the fifth DCI processing time length in the previous embodiments) of OFDM symbols between receiving the DCI by the UE and demodulating information in the DCI by the UE in the multi-TRP scenario. Km indicates the number (that is, the sixth DCI processing time length in the previous embodiments) of OFDM symbols between receiving the DCI by the UE and scheduling the PDSCH HARQ-ACK by the UE in the multi-TRP scenario. Nm and Km serve as constraints for PDSCH HARQ-ACK scheduling by the UE.

Method three: x OFDM symbols are added.

In the sTRP scenario, the time length the UE schedules a PDSCH HARQ-ACK by using the DCI uses protocol rules of the related art and is configured with constraints N and K by a base station. N indicates the number of OFDM symbols between receiving the DCI by the UE and demodulating information in the DCI by the UE. K indicates the number of OFDM symbols between receiving the DCI by the UE and scheduling the PDSCH HARQ-ACK by the UE. N and K serve as constraints for PDSCH HARQ-ACK scheduling by the UE.

In the multi-TRP scenario, the time length the UE schedules the PDSCH HARQ-ACK is configured with more constraints and is configured with two additional parameters, x and x' in addition to the protocol of the related art, that is, the time length the UE schedules the PDSCH HARQ-ACK is configured with constraints N and K and parameters x and x' by the base station.

The number (that is, the fifth DCI processing time length in the previous embodiments) of OFDM symbols between receiving the DCI by the UE and demodulating information in the DCI by the UE is N + x. The number (that is, the sixth DCI processing time length in the previous embodiments) of OFDM symbols between receiving the DCI by the UE and scheduling the PDSCH HARQ-ACK by the UE is K + x'. Parameters x and x' as well as N and K serve as constraints for CSI processing by the UE.

Method four: x OFDM symbols are added, and x is related to the number (N1) of candidates.

In the sTRP scenario, the time length the UE schedules a PDSCH HARQ-ACK by using the DCI uses protocol rules of the related art and is configured with constraints N and K by a base station. N indicates the number of OFDM symbols between receiving the DCI by the UE and demodulating information in the DCI by the UE. K indicates the number of OFDM symbols between receiving the DCI by the UE and scheduling the PDSCH HARQ-ACK by the UE. N and K serve as constraints for PDSCH HARQ-ACK scheduling by the UE.

In the multi-TRP scenario, the time length the UE schedules the PDSCH HARQ-ACK is configured with more constraints and is configured with two additional parameters, x and x' in addition to the protocol of the related art, that is, the time length the UE schedules the PDSCH HARQ-ACK is configured with constraints N and K and parameters x and x' by the base station.

The values of parameters x and x' are related to the value of the number (N) of candidates. For example, if N1 = 1, then x = c, and x' = c'; if N1 = 2, then x = 2c, and x' = 2c'; and if N1 = 3, then x = 3c, and x' = 3c'. c and c' are constants.

The number (that is, the fifth DCI processing time length in the previous embodiment) of OFDM symbols between receiving the DCI by the UE and demodulating information in the DCI by the UE is N + x. The number (that is, the sixth DCI processing time length in the previous embodiment) of OFDM symbols between receiving the DCI by the UE and scheduling the PDSCH HARQ-ACK by the UE is K + x'. Parameters x and x' as well as N and K serve as constraints for CSI processing by the UE.

Method five: x OFDM symbols are added, and x is related to the number of blind detections (BD number).

In the sTRP scenario, the time length the UE schedules a PDSCH HARQ-ACK by using the DCI uses protocol rules of the related art and is configured with constraints N and K by a base station. N indicates the number of OFDM symbols between receiving the DCI by the UE and demodulating information in the DCI by the UE. K indicates the number of OFDM symbols between receiving the DCI by the UE and scheduling the PDSCH HARQ-ACK by the UE. N and K serve as constraints for PDSCH HARQ-ACK scheduling by the UE.

In the multi-TRP scenario, the time length the UE schedules the PDSCH HARQ-ACK is configured with more constraints and is configured with two additional parameters, x and x' in addition to the protocol of the related art, that is, the time length the UE schedules the PDSCH HARQ-ACK is configured with constraints N and K and parameters x and x' by the base station.

The values of parameters x and x' are related to the value of the BD number. For example, if BD number = 1, then x = c, and x' = c'; if BD number = 2, then x = 2c, and x' = 2c'; and if BD number = 3, then x = 3c, and x' = 3c'. c and c' are constants.

The number (that is, the fifth DCI processing time length in the previous embodiment) of OFDM symbols between receiving the DCI by the UE and demodulating information in the DCI by the UE is N + x. The number (that is, the sixth DCI processing time length in the previous embodiment) of OFDM symbols between receiving the DCI by the UE and scheduling the PDSCH HARQ-ACK by the UE is K + x'. Parameters x and x' as well as N and K serve as constraints for CSI processing by the UE.

FIG. 8 is a block diagram of an information transmission apparatus according to an embodiment of the present application. This embodiment is applied to a first communication node. Illustratively, the first communication node may be a base station. As shown in FIG. 8, the information transmission apparatus of this embodiment includes a determination module 810 and a sending module 820.

The determination module 810 is configured to determine a DCI-related processing parameter in an multi-TRP scenario.

The sending module 820 is configured to send the DCI-related processing parameter to a second communication node to enable the second communication node to process a DCI-related parameter based on the DCI-related processing parameter.

In an embodiment, the DCI-related processing parameter is configured for processing one piece of DCI and reporting one piece of CSI, and the DCI-related processing parameter includes a first CSI processing time length and a second CSI processing time length. The first CSI processing time length indicates the total number of OFDM symbols between decoding the DCI by the second communication node and reporting the CSI by the second communication node. The second CSI processing time length indicates the total number of OFDM symbols between measuring a CSI-RS by the second communication node and reporting the CSI by the second communication node.

In an embodiment, the determination module 810 includes a first determination unit and a second determination unit.

The first determination unit is configured to determine the first CSI processing time length in the multi-TRP scenario based on a third CSI processing time length.

The second determination unit is configured to determine the second CSI processing time length in the multi-TRP scenario based on a fourth CSI processing time length. The third CSI processing time length indicates the total number of OFDM symbols between decoding the DCI by the second communication node and reporting the CSI by the second communication node in an sTRP scenario. The fourth CSI processing time length indicates the total number of OFDM symbols between measuring the CSI-RS by the second communication node and reporting the CSI by the second communication node in the sTRP scenario.

In an embodiment, the first CSI processing time length is the same as the third CSI processing time length, and the second CSI processing time length is the same as the fourth CSI processing time length.

In an embodiment, the first CSI processing time length is different from the third CSI processing time length, and the second CSI processing time length is different from the fourth CSI processing time length.

In an embodiment, the determination module 810 includes a third determination unit and a fourth determination unit.

The third determination unit is configured to determine the first CSI processing time length in the multi-TRP scenario based on a third CSI processing time length and a first number of OFDM symbols.

The fourth determination unit is configured to determine the second CSI processing time length in the multi-TRP scenario based on a fourth CSI processing time length and a second number of OFDM symbols.

In an embodiment, the first number of OFDM symbols and the second number of OFDM symbols are each related to one of the following parameters: the number of CMR pairs in the multi-TRP scenario, the total number of CMRs in the multi-TRP scenario; a CSI reporting mode in the multi-TRP scenario; a CMR sharing relationship in the multi-TRP scenario; or the total number of pieces of CSI in an sTRP scenario.

In an embodiment, the DCI-related processing parameter is configured for processing two pieces of DCI, where the DCI is configured for scheduling PUSCH bearer data, and the DCI-related processing parameter includes a first DCI processing time length and a second DCI processing time length. The first DCI processing time length indicates the total number of OFDM symbols between receiving the DCI by the second communication node and demodulating the PUSCH bearer data in the DCI by the second communication node. The second DCI processing time length indicates the total number of OFDM symbols between receiving the DCI by the second communication node and scheduling a PUSCH by the second communication node.

In an embodiment, the determination module 810 includes a fifth determination unit and a sixth determination unit.

The fifth determination unit is configured to determine the first DCI processing time length in the multi-TRP scenario based on a third DCI processing time length.

The sixth determination unit is configured to determine the second DCI processing time length in the multi-TRP scenario based on a fourth DCI processing time length. The third DCI processing time length indicates the total number of OFDM symbols between receiving the DCI by the second communication node and demodulating the PUSCH bearer data in the DCI by the second communication node in an sTRP scenario. The fourth DCI processing time length indicates the total number of OFDM symbols between receiving the DCI by the second communication node and scheduling the PUSCH by the second communication node in the sTRP scenario.

In an embodiment, the first DCI processing time length is the same as the third DCI processing time length, and the second DCI processing time length is the same as the fourth DCI processing time length.

In an embodiment, the first DCI processing time length is different from the third DCI processing time length, and the second DCI processing time length is different from the fourth DCI processing time length.

In an embodiment, the determination module 810 includes a seventh determination unit and an eighth determination unit.

The seventh determination unit is configured to determine the first DCI processing time length in the multi-TRP scenario based on a third DCI processing time length and a third number of OFDM symbols.

The eighth determination unit is configured to determine the second DCI processing time length in the multi-TRP scenario based on a fourth DCI processing time length and a fourth number of OFDM symbols.

In an embodiment, the third number of OFDM symbols and the fourth number of OFDM symbols are each related to one of the following parameters: the number of candidate PDCCHs in a search space or the number of blind detections.

In an embodiment, the DCI-related processing parameter is configured for processing two pieces of DCI, where the DCI is configured for scheduling a PDSCH HARQ-ACK, and the DCI-related processing parameter includes a fifth DCI processing time length and a sixth DCI processing time length. The fifth DCI processing time length indicates the total number of OFDM symbols between receiving the DCI by the second communication node and demodulating PDSCH bearer data in the DCI by the second communication node. The sixth DCI processing time length indicates the total number of OFDM symbols between receiving the DCI by the second communication node and scheduling the PDSCH HARQ-ACK by the second communication node.

In an embodiment, the determination module 810 includes a ninth determination unit and a tenth determination unit.

The ninth determination unit is configured to determine the fifth DCI processing time length in the multi-TRP scenario based on a seventh DCI processing time length.

The tenth determination unit is configured to determine the sixth DCI processing time length in the multi-TRP scenario based on an eighth DCI processing time length. The seventh DCI processing time length indicates the total number of OFDM symbols between receiving the DCI by the second communication node and demodulating the PDSCH bearer data in the DCI by the second communication node in an sTRP scenario. The eighth DCI processing time length indicates the total number of OFDM symbols between receiving the DCI by the second communication node and scheduling the PDSCH HARQ-ACK by the second communication node in the sTRP scenario.

In an embodiment, the fifth DCI processing time length is the same as the seventh DCI processing time length, and the sixth DCI processing time length is the same as the eighth DCI processing time length.

In an embodiment, the fifth DCI processing time length is different from the seventh DCI processing time length, and the sixth DCI processing time length is different from the eighth DCI processing time length.

In an embodiment, the determination module 810 includes an eleventh determination unit and a twelfth determination unit.

The eleventh determination unit is configured to determine the fifth DCI processing time length in the multi-TRP scenario based on a seventh DCI processing time length and a fifth number of OFDM symbols.

The twelfth determination unit is configured to determine the sixth DCI processing time length in the multi-TRP scenario based on an eighth DCI processing time length and a sixth number of OFDM symbols.

In an embodiment, the fifth number of OFDM symbols and the sixth number of OFDM symbols are each related to one of the following parameters: the number of candidate PDCCHs in a search space or the number of blind detections.

The information transmission apparatus of this embodiment is configured to perform the information transmission method applied to the first communication node according to the embodiment shown in FIG. 1. The implementation principles and effects of the information transmission apparatus of this embodiment are similar to those of the information transmission method applied to the first communication node according to the embodiment shown in FIG. 1 and thus are not described again here.

FIG. 9 is a block diagram of another information transmission apparatus according to an embodiment of the present application. This embodiment is applied to a second communication node. Illustratively, the second communication node may be a UE. As shown in FIG. 9, the information transmission apparatus of this embodiment includes a receiving module 910 and a processor 920.

The receiving module 910 is configured to receive DCI-related processing parameter sent by a first communication node in an multi-TRP scenario.

The processor is configured to process a DCI-related parameter based on the DCI-related processing parameter.

In an embodiment, the DCI-related processing parameter is configured for processing one piece of DCI and reporting one piece of CSI, and the DCI-related processing parameter includes a first CSI processing time length and a second CSI processing time length. The first CSI processing time length indicates the total number of OFDM symbols between decoding the DCI by the second communication node and reporting the CSI. The second CSI processing time length indicates the total number of OFDM symbols between measuring a CSI-RS by the second communication node and reporting the CSI.

In an embodiment, determining the DCI-related processing parameter includes determining the first CSI processing time length in the multi-TRP scenario based on a third CSI processing time length and determining the second CSI processing time length in the multi-TRP scenario based on a fourth CSI processing time length. The third CSI processing time length indicates the total number of OFDM symbols between decoding the DCI by the second communication node and reporting the CSI by the second communication node in an sTRP scenario. The fourth CSI processing time length indicates the total number of OFDM symbols between measuring the CSI-RS by the second communication node and reporting the CSI by the second communication node in the sTRP scenario.

In an embodiment, the first CSI processing time length is the same as the third CSI processing time length, and the second CSI processing time length is the same as the fourth CSI processing time length.

In an embodiment, the first CSI processing time length is different from the third CSI processing time length, and the second CSI processing time length is different from the fourth CSI processing time length.

In an embodiment, determining the DCI-related processing parameter includes determining the first CSI processing time length in the multi-TRP scenario based on a third CSI processing time length and a first number of OFDM symbols and determining the second CSI processing time length in the multi-TRP scenario based on a fourth CSI processing time length and a second number of OFDM symbols.

In an embodiment, the first number of OFDM symbols and the second number of OFDM symbols are each related to one of the following parameters: the number of CMR pairs in the multi-TRP scenario, the total number of CMRs in the multi-TRP scenario; a CSI reporting mode in the multi-TRP scenario; a CMR sharing relationship in the multi-TRP scenario; or the total number of pieces of CSI in an sTRP scenario.

In an embodiment, the DCI-related processing parameter is configured for processing two pieces of DCI, where the DCI is configured for scheduling PUSCH bearer data, and the DCI-related processing parameter includes a first DCI processing time length and a second DCI processing time length. The first DCI processing time length indicates the total number of OFDM symbols between receiving the DCI by the second communication node and demodulating the PUSCH bearer data in the DCI by the second communication node. The second DCI processing time length indicates the total number of OFDM symbols between receiving the DCI by the second communication node and scheduling a PUSCH by the second communication node.

In an embodiment, determining the DCI-related processing parameter includes determining the first DCI processing time length in the multi-TRP scenario based on a third DCI processing time length and determining the second DCI processing time length in the multi-TRP scenario based on a fourth DCI processing time length. The third DCI processing time length indicates the total number of OFDM symbols between receiving the DCI by the second communication node and demodulating the PUSCH bearer data in the DCI by the second communication node in an sTRP scenario. The fourth DCI processing time length indicates the total number of OFDM symbols between receiving the DCI by the second communication node and scheduling the PUSCH by the second communication node in the sTRP scenario.

In an embodiment, the first DCI processing time length is the same as the third DCI processing time length, and the second DCI processing time length is the same as the fourth DCI processing time length.

In an embodiment, the first DCI processing time length is different from the third DCI processing time length, and the second DCI processing time length is different from the fourth DCI processing time length.

In an embodiment, determining the DCI-related processing parameter includes determining the first DCI processing time length in the multi-TRP scenario based on a third DCI processing time length and a third number of OFDM symbols and determining the second DCI processing time length in the multi-TRP scenario based on a fourth DCI processing time length and a fourth number of OFDM symbols.

In an embodiment, the third number of OFDM symbols and the fourth number of OFDM symbols are each related to one of the following parameters: the number of candidate PDCCHs in a search space or the number of blind detections.

In an embodiment, the DCI-related processing parameter is configured for processing two pieces of DCI, where the DCI is configured for scheduling a PDSCH HARQ-ACK, and the DCI-related processing parameter includes a fifth DCI processing time length and a sixth DCI processing time length. The fifth DCI processing time length indicates the total number of OFDM symbols between receiving the DCI by the second communication node and demodulating PDSCH bearer data in the DCI by the second communication node. The sixth DCI processing time length indicates the total number of OFDM symbols between receiving the DCI by the second communication node and scheduling the PDSCH HARQ-ACK by the second communication node.

In an embodiment, determining the DCI-related processing parameter includes determining the fifth DCI processing time length in the multi-TRP scenario based on a seventh DCI processing time length and determining the sixth DCI processing time length in the multi-TRP scenario based on an eighth DCI processing time length. The seventh DCI processing time length indicates the total number of OFDM symbols between receiving the DCI by the second communication node and demodulating the PDSCH bearer data in the DCI by the second communication node in an sTRP scenario. The eighth DCI processing time length indicates the total number of OFDM symbols between receiving the DCI by the second communication node and scheduling the PDSCH HARQ-ACK by the second communication node in the sTRP scenario.

In an embodiment, the fifth DCI processing time length is the same as the seventh DCI processing time length, and the sixth DCI processing time length is the same as the eighth DCI processing time length.

In an embodiment, the fifth DCI processing time length is different from the seventh DCI processing time length, and the sixth DCI processing time length is different from the eighth DCI processing time length.

In an embodiment, determining the DCI-related processing parameter includes determining the fifth DCI processing time length in the multi-TRP scenario based on a seventh DCI processing time length and a fifth number of OFDM symbols and determining the sixth DCI processing time length in the multi-TRP scenario based on an eighth DCI processing time length and a sixth number of OFDM symbols.

In an embodiment, the fifth number of OFDM symbols and the sixth number of OFDM symbols are each related to one of the following parameters: the number of candidate PDCCHs in a search space or the number of blind detections.

The information transmission apparatus of this embodiment is configured to perform the information transmission method applied to the second communication node according to the embodiment shown in FIG. 2. The implementation principles and effects of the information transmission apparatus of this embodiment are similar to those of the information transmission method applied to the second communication node according to the embodiment shown in FIG. 1 and thus are not described again here.

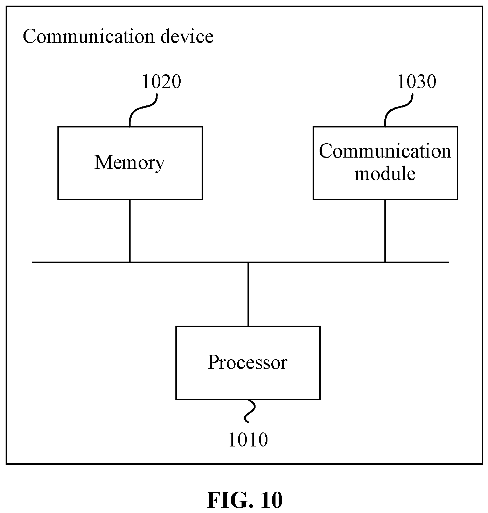

FIG. 10 is a diagram illustrating the structure of a communication device according to an embodiment of the present application. As shown in FIG. 10, the communication device of the present application includes a processor 1010, a memory 1020, and a communication module 1030. One or more processors 1010 may be configured in the device. FIG. 10 uses one processor 1010 as an example. One or more memories1020 may be configured in the device. FIG. 10 uses one memory 1020 as an example. The processor 1010, the memory 1020, and the communication module 1030 of the device may be connected by a bus or otherwise. FIG. 10 uses connection by a bus as an example. In this embodiment, the device may be a first communication node, for example, a base station.

The memory 1020, as a computer-readable storage medium, may be configured to store software programs and computer-executable programs and modules such as program instructions/modules corresponding to the device in any embodiment of the present application (such as the determination module 810 and the sending module 820 of the information transmission apparatus). The memory 1020 may include a program storage region and a data storage region. The program storage region may store an operating system and an application program required by at least one function. The data storage region may store data created according to the use of the device. Additionally, the memory 1020 may be, for example, a high-speed random-access memory or a nonvolatile memory such as at least one disk memory, a flash memory, or another nonvolatile solid-state memory. In some examples, the memory 1020 may be a memory remote from the processor 1010. The remote memory may be connected to the device by a network. Examples of the preceding network include, but are not limited to, the Internet, an intranet, a local area network, a mobile communication network, and a combination thereof.

The communication module 1030 is configured to perform communication interaction between the first communication node and a second communication node.

When the communication device is the first communication node, the device may be configured to perform the information transmission method applied to the first communication node according to any previous embodiment and has corresponding functions and effects.

When the communication device is the second communication node, the device may be configured to perform the information transmission method applied to the second communication node according to any previous embodiment and has corresponding functions and effects.

An embodiment of the present application provides a storage medium storing computer-executable instructions which, when executed by a computer processor, cause the processor to perform an information transmission method applied to a first communication node. The method includes determining a DCI-related processing parameter in an multi-TRP scenario and sending the DCI-related processing parameter to a second communication node to enable the second communication node to process a DCI-related parameter based on the DCI-related processing parameter.

An embodiment of the present application provides a storage medium storing computer-executable instructions which, when executed by a computer processor, cause the processor to perform an information transmission method applied to a second communication node. The method includes receiving a DCI-related processing parameter sent by a first communication node in an multi-TRP scenario and processing a DCI-related parameter based on the DCI-related processing parameter.

It is to be understood by those skilled in the art that the term "user equipment" encompasses any suitable type of wireless user device, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). The computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. An information transmission method, the method being applied to a first communication node and comprising:
determining a downlink control information-related, DCI-related, processing parameter in a multiple transmission and reception points, multi-TRP, scenario; and
sending the DCI-related processing parameter to a second communication node to enable the second communication node to process a DCI-related parameter based on the DCI-related processing parameter.

2. The method of claim 1, wherein the DCI-related processing parameter is configured for processing one piece of DCI and reporting one piece of channel state information, CSI; and
the DCI-related processing parameter comprises a first CSI processing time length and a second CSI processing time length, wherein the first CSI processing time length indicates a total number of orthogonal frequency-division multiplexing, OFDM, symbols between decoding the DCI by the second communication node and reporting the CSI by the second communication node, and the second CSI processing time length indicates a total number of OFDM symbols between measuring a channel state information reference signal, CSI-RS, by the second communication node and reporting the CSI by the second communication node.

3. The method of claim 2, wherein determining the DCI-related processing parameter in the multi-TRP scenario comprises:
determining the first CSI processing time length in the multi-TRP scenario based on a third CSI processing time length; and
determining the second CSI processing time length in the multi-TRP scenario based on a fourth CSI processing time length,
wherein the third CSI processing time length indicates a total number of OFDM symbols between decoding the DCI by the second communication node and reporting the CSI by the second communication node in a single transmission and reception point, sTRP, scenario, and the fourth CSI processing time length indicates a total number of OFDM symbols between measuring the CSI-RS by the second communication node and reporting the CSI by the second communication node in the sTRP scenario.

4. The method of claim 3, wherein the first CSI processing time length is the same as the third CSI processing time length, and the second CSI processing time length is the same as the fourth CSI processing time length.

5. The method of claim 3, wherein the first CSI processing time length is different from the third CSI processing time length, and the second CSI processing time length is different from the fourth CSI processing time length.

6. The method of claim 2, wherein determining the DCI-related processing parameter in the multi-TRP scenario comprises:
determining the first CSI processing time length in the multi-TRP scenario based on a third CSI processing time length and a first number of OFDM symbols; and
determining the second CSI processing time length in the multi-TRP scenario based on a fourth CSI processing time length and a second number of OFDM symbols.

7. The method of claim 6, wherein the first number of OFDM symbols and the second number of OFDM symbols are each related to one of the following parameters:
a number of channel measurement resource, CMR, pairs in the multi-TRP scenario, a total number of CMRs in the multi-TRP scenario; a CSI reporting mode in the multi-TRP scenario; a CMR sharing relationship in the multi-TRP scenario; or a total number of pieces of CSI in an sTRP scenario.

8. The method of claim 1, wherein the DCI-related processing parameter is configured for processing two pieces of DCI, wherein the DCI is configured for scheduling physical uplink shared channel, PUSCH, bearer data; and
the DCI-related processing parameter comprises a first DCI processing time length and a second DCI processing time length, wherein the first DCI processing time length indicates a total number of OFDM symbols between receiving the DCI by the second communication node and demodulating the PUSCH bearer data in the DCI by the second communication node; and the second DCI processing time length indicates a total number of OFDM symbols between receiving the DCI by the second communication node and scheduling a PUSCH by the second communication node.

9. The method of claim 8, wherein determining the DCI-related processing parameter in the multi-TRP scenario comprises:
determining the first DCI processing time length in the multi-TRP scenario based on a third DCI processing time length; and
determining the second DCI processing time length in the multi-TRP scenario based on a fourth DCI processing time length,
wherein the third DCI processing time length indicates a total number of OFDM symbols between receiving the DCI by the second communication node and demodulating the PUSCH bearer data in the DCI by the second communication node in an sTRP scenario, and the fourth DCI processing time length indicates a total number of OFDM symbols between receiving the DCI by the second communication node and scheduling the PUSCH by the second communication node in the sTRP scenario.

10. The method of claim 9, wherein the first DCI processing time length is the same as the third DCI processing time length, and the second DCI processing time length is the same as the fourth DCI processing time length.

11. The method of claim 9, wherein the first DCI processing time length is different from the third DCI processing time length, and the second DCI processing time length is different from the fourth DCI processing time length.

12. The method of claim 8, wherein determining the DCI-related processing parameter in the multi-TRP scenario comprises:
determining the first DCI processing time length in the multi-TRP scenario based on a third DCI processing time length and a third number of OFDM symbols; and
determining the second DCI processing time length in the multi-TRP scenario based on a fourth DCI processing time length and a fourth number of OFDM symbols.

13. The method of claim 12, wherein the third number of OFDM symbols and the fourth number of OFDM symbols are each related to one of the following parameters: a number of candidate physical downlink control channels, PDCCHs, in a search space or a number of blind detections.

14. The method of claim 1, wherein the DCI-related processing parameter is configured for processing two pieces of DCI, wherein the DCI is configured for scheduling a physical downlink shared channel hybrid automatic repeat request acknowledgement, PDSCH HARQ-ACK; and
the DCI-related processing parameter comprises a fifth DCI processing time length and a sixth DCI processing time length, wherein the fifth DCI processing time length indicates a total number of OFDM symbols between receiving the DCI by the second communication node and demodulating PDSCH bearer data in the DCI by the second communication node; and the sixth DCI processing time length indicates a total number of OFDM symbols between receiving the DCI by the second communication node and scheduling the PDSCH HARQ-ACK by the second communication node.

15. The method of claim 14, wherein determining the DCI-related processing parameter in the multi-TRP scenario comprises:
determining the fifth DCI processing time length in the multi-TRP scenario based on a seventh DCI processing time length; and
determining the sixth DCI processing time length in the multi-TRP scenario based on an eighth DCI processing time length,
wherein the seventh DCI processing time length indicates a total number of OFDM symbols between receiving the DCI by the second communication node and demodulating the PDSCH bearer data in the DCI by the second communication node in an sTRP scenario, and the eighth DCI processing time length indicates a total number of OFDM symbols between receiving the DCI by the second communication node and scheduling the PDSCH HARQ-ACK by the second communication node in the sTRP scenario.

16. The method of claim 15, wherein the fifth DCI processing time length is the same as the seventh DCI processing time length, and the sixth DCI processing time length is the same as the eighth DCI processing time length.

17. The method of claim 15, wherein the fifth DCI processing time length is different from the seventh DCI processing time length, and the sixth DCI processing time length is different from the eighth DCI processing time length.

18. The method of claim 14, wherein determining the DCI-related processing parameter in the multi-TRP scenario comprises:
determining the fifth DCI processing time length in the multi-TRP scenario based on a seventh DCI processing time length and a fifth number of OFDM symbols; and
determining the sixth DCI processing time length in the multi-TRP scenario based on an eighth DCI processing time length and a sixth number of OFDM symbols.

19. The method of claim 18, wherein the fifth number of OFDM symbols and the sixth number of OFDM symbols are each related to one of the following parameters: a number of candidate PDCCHs in a search space or a number of blind detections.

20. An information transmission method, the method being applied to a second communication node and comprising:
receiving a downlink control information-related, DCI-related, processing parameter sent by a first communication node in a multiple transmission and reception points, multi-TRP, scenario; and
processing a DCI-related parameter based on the DCI-related processing parameter.

21. A communication device, comprising a communication module, a memory, and at least one processor, wherein
the communication module is configured to perform a communicative interaction between a first communication node and a second communication node;
the memory is configured to store at least one program; and
the at least one processor is configured to perform the method of any one of claims 1 to 19 or the method of claim 20 when executing the at least one program.

22. A storage medium storing a computer program which, when executed by a processor, causes the processor to perform the method of any one of claims 1 to 19 or the method of claim 20.
